(19) Europäisches Patentamt

European Patent Office

Office européen des brevets

(11) Veröffentlichungsnummer: **0 475 405 A2**

# (12) EUROPÄISCHE PATENTANMELDUNG

(21) Anmeldenummer: **91115469.8**

(22) Anmeldetag: **12.09.91**

(51) Int. Cl.5: **A01D 57/02**, A01D 80/02

(30) Priorität: **12.09.90 DE 4028885**

(43) Veröffentlichungstag der Anmeldung:
**18.03.92 Patentblatt 92/12**

(84) Benannte Vertragsstaaten:
**DE ES FR GB IT NL**

(71) Anmelder: **Klöckner-Humboldt-Deutz AG
Otto Strasse 1
W-5000 Köln 90(DE)**

(72) Erfinder: **von Allwörden, Wilhelm, Dipl.-Ing.
Alpenstrasse 18
W-7704 Gailingen(DE)**

(54) **Zinken für Erntemaschinen.**

㊄ Die Erfindung ist bezogen auf Zinken, die in landwirtschaftlichen Erntemaschinen an rotierenden Bauteilen zur Förderung von Halmgut eingesetzt werden und über eine geschlitzte Öse an einem Tragkörper befestigt sind.

Als Aufgabe liegt der Erfindung zugrunde, eine Zinkengestaltung darzustellen, mit der durch eine Optimierung der Befestigung und Drehsicherung die Lebensdauer der Zinken erhöht wird und eine glattflächige Oberfläche auch im Bereich der Zinkenbefestigung darstellbar ist.

Gelöst wird die Aufgabe durch eine Lage des Ösenschlitzes in Richtung der Zinkenbeanspruchung sowie durch ein Befestigungselement, das in Richtung der Ösenmitte eingesetzt ist.

Fig. 2

EP 0 475 405 A2

Die Erfindung bezieht sich auf Zinken, die in landwirtschaftlichen Heu- und Erntemaschinen an rotierenden, horizontal oder vertikal angeordneten Bauelementen zur Förderung von Halmgut eingesetzt sind.

Aus der EP-OS 0 347 201 ist ein Kunststoffzinken für die Haspel von Mähdreschern bekannt, der eine geschlitzte Befestigungsöse aufweist, die durch eine seitliche Schraubverbindung verspannt ist. Als Drehsicherung dient ein in die Ösenöffnung gerichteter Mitnehmer, der in eine auf dem Tragkörper vorgesehene Nut bzw. Bohrung ragt. Bedingt durch die seitliche Befestigung neigt dieser Zinken zur Mitnahme von Halmgut aufgrund der einseitig nach außen ragenden Verschraubung mit einer nachteiligen Einflußnahme auf die Haspelwirkung. Außerdem ist der aus dem Zinkenmaterial hergestellte Mitnehmer häufig nicht in der Lage eine dauerhafte Drehsicherung zu gewähren, da die am Zinken angreifenden Kräfte ein Abscheren des Mitnehmers bewirken.

Es ist daher Aufgabe der Erfindung einen Zinken darzustellen, der den auftretenden Belastungen im Bereich der Befestigung standhält, eine nahezu glattflächige Oberfläche auch im Ösenbereich bildet und darüber hinaus mit einfachen Mitteln ausgewechselt werden kann.

Versuche, einen Zinken darzustellen, der der Aufgabe gerecht wird, führten dazu, zur Lagefixierung zumindest ein separates Bauelement vorzusehen, das radial in den Tragkörper reicht. Es ist weiter im Hinblick auf hochbelastete Zinken anstelle von einem zwei separate Bauelemente vorzusehen, die in der Öse und im Ösenfuß angeordnet sind. Dadurch wird eine punktuelle Krafteinwirkung vermieden. Die Krafteinleitung durch die Halmförderung verursacht in der erfindungsgemäß gestalteten Zinkenöse eine günstige Kraftübertragung über einen weiten Umfangsbereich der Zinkenöse. Diese Zinkenbefestigung bewirkt ein nützliches "Zuziehen" der Öse, durch die sich vorteilhaft ein gewünschter Reibschluß über einen längeren Umfangsbereich zwischen dem langen Ösenabschnitt und dem Tragkörper einstellt mit der Folge, daß die auf das Bauelement - das zur Drehsicherung eingesetzt ist - einwirkenden Scherkräfte vorteilhaft verringert werden und insgesamt durch die Zinkengestaltung und -befestigung die Dauerfestigkeit des Zinkens begünstigt wird. Durch die radiale Einbringung des zur Lagefixierung eingesetzten Bauelementes wird eine weitere Teilaufgabe gelöst, die eine glattflächige Oberfläche im Ösenbereich fordert, da kein Bauelement nachteilig aus der Außenkontur der Zinkenöse hervortritt. Vorteilhaft kommt es daher bei den erfindungsgemäß gestalteten Zinken nicht zu einem nachteiligen funktionsstörenden Umwickeln der Zinken mit Halmgut.

In einer Ausgestaltung der Erfindung ist vorgesehen, zur Lagefixierung einen Befestigungsbolzen vorzusehen, der in Bohrungen im langen Ösenabschnitt und im Tragkörper eingesetzt ist. Zur Verbesserung der Fixierung ist weiter ein Befestigungsbolzen einsetzbar, der durch den Tragkörper hindurchgeführt ist und bis in eine Sacklochbohrung im Ösenfuß ragt. Der verlängerte, in seiner Einbaulage mit der Richtung des Schafts übereinstimmende Befestigungsbolzen verbessert zum einen die Zentrierung zwischen dem Zinken und dem Tragkörper und verringert die Beanspruchung des Befestigungsbolzens durch die Verdoppelung der Scherfläche. Der vorteilhaft aus Stahl gefertigte Befestigungsbolzen besitzt am Kopfende zumindest eine elastische Klammer, die federnd ausgebildet und im eingebauten Zustand der Außenkontur der Zinkenöse angepaßt ist und diese über einen Winkel von größer als 90° vom Befestigungsbolzen ausgehend umschlingt. Die Klammer sorgt für eine definierte Lage des Befestigungsbolzens und ermöglicht darüber hinaus einen werkzeuglosen Zinkenwechsel.

Als eine Alternative zu dem Befestigungsbolzen kann der Zinken durch eine Schraube befestigt werden, die durch den langen Ösenabschnitt und den Tragkörper geführt ist und in einem im Ösenfuß eingebrachten Gewinde verschraubt ist. Zur Vermeidung von überstehenden Kanten am Außenumfang der Zinkenöse bietet es sich an, eine Innensechskantschraube einzusetzen, welche in einer Stufenbohrung im Ösenabschnitt abgesenkt eingebracht ist. Diese Zinkenbefestigung bietet sich beispielsweise für Heumaschinen, wie Heuwender und Schwader an, durch die eine nachteilige Mitnahme von Halmgut im Bereich der Zinkenbefestigung vermieden werden kann, die vielfach eine Unterbrechung des Arbeitsvorgangs erfordert.

Zur Darstellung einer Zinkenbefestigung mit zwei getrennten Bauelementen ist vorgesehen, im Zinkenfuß zur Drehsicherung einen Mitnehmer anzuordnen und weiter in gleicher Flucht mit einer übereinstimmenden Ausrichtung eine Schraubverbindung vorzusehen, mit der der lange Ösenabschnitt mit dem Tragkörper verbunden ist. Aus Festigkeitsgründen bietet es sich an, einen Stahl-Mitnehmer einzusetzen.

Eine weitere Zinkenbefestigung sieht eine beide Ösenabschnitte verbindende Schraube vor, wobei die vorzugsweise verwendete Innensechskantschraube abgesenkt im kurzen Ösenabschnitt, d.h. im Bereich zwischen dem Ösenschlitz und dem Ösenfuß eingesetzt ist, durch den Tragkörper geführt und im gegenüberliegenden Ösenabschnitt eingeschraubt ist. Diese Zinkenbefestigung ist vorteilhaft für Pick-up-Zinken einsetzbar, die in Aufsammel-Pressen Verwendung finden und deren Anordnung der Zugänglichkeit angepaßt ist.

In Ausgestaltung der Erfindung zur Erreichung einer Anlage des langen Ösenabschnittes über einen erweiterten Bereich bei auftretender Zinkenbelastung aufgrund des "Zuzieh-Effektes", ist eine Zinkenöse vorgesehen, deren Ösenschlitz in einem Winkel von ca. 45° zum Schaft des Zinkens auf der bei einer Krafteinleitung unbelasteten Seite des Zinkens angeordnet ist. Die Zinkenbefestigung wird erreicht durch eine im langen Ösenabschnitt in dessen Endbereich nahe dem Ösenschlitz angebrachte Schraube, mit der die Öse am Tragkörper befestigt wird. Abhängig von der Zugänglichkeit der Verschraubung bietet es sich an, alternativ eine Sechskantschraube wie auch Innensechskantschraube zu verwenden.

Der erfindungsgemäße Zinken ist vorteilhaft als Kunststoffzinken darstellbar, mit der die Forderung nach einer glattflächigen Oberfläche erreichbar ist. Aus Festigkeitsgründen bietet es sich bei Kunststoffzinken an, den zur Drehsicherung eingesetzten Mitnehmer aus Stahl zu fertigen.

Durch Versuche hat sich eine Ösengestaltung als wirksam erwiesen, deren Schlitzlage übereinstimmt mit der Richtung der Krafteinleitung in den Zinken und wobei der Schlitz unter einem Winkel von ca. 90° zur Schaftrichtung angebracht ist und sich folglich zwei unterschiedlich lange Ösenabschnitte ergeben. Die gegenüberliegend angeordneten, den Ösenschlitz bildenden Ösenabschnitte sind dabei gerundet ausgebildet unter Beibehaltung des Querschnitts.

Als eine vorteilhafte Gestaltung des Zinkenschaftes bietet es sich an, diesen mit einer doppelten Krümmung zu versehen, wobei das freie Ende in Richtung der Zinkenbeanspruchung zeigt, zur Steigerung der Zinken-Förderwirkung. Durch die Verwendung eines Schaft-Profils, das sich von der Öse beginnend zum freien Ende kontinuierlich verjüngt, wird die nachteilige, dauernde Mitnahme von Halmgut unterbunden, da außerhalb der gewünschten Förderwirkung der Zinken das Halmgut gewünscht abgleitet.

Weitere Merkmale der Erfindung ergeben sich aus der Figurenbeschreibung, die ausführlich die in den Zeichnungen dargestellten Ausführungsbeispiele erläutern.
Es zeigen:

Fig. 1    in einer Schnittdarstellung den erfindungsgemäßen Zinken,

Fig. 2    den Zinken gemäß Fig. 1 im eingebauten Zustand, der durch eine Befestigungsbolzen gehalten ist,

Fig. 3    eine alternative Befestigung des Zinkens mit einer Innensechskantschraube in Verbindung mit einem eingesetzten Mitnehmer,

Fig. 4    einen Zinken, bei dem die Befestigung mittels einer in den kurzen Ösenabschnitt eingesetzten Innensechskantschraube erfolgt,

Fig. 5    einen im Vergleich zu den vorherigen Abbildungen in Richtung des Zinkenschaftes verlagert ausgebildeten Ösenschlitz.

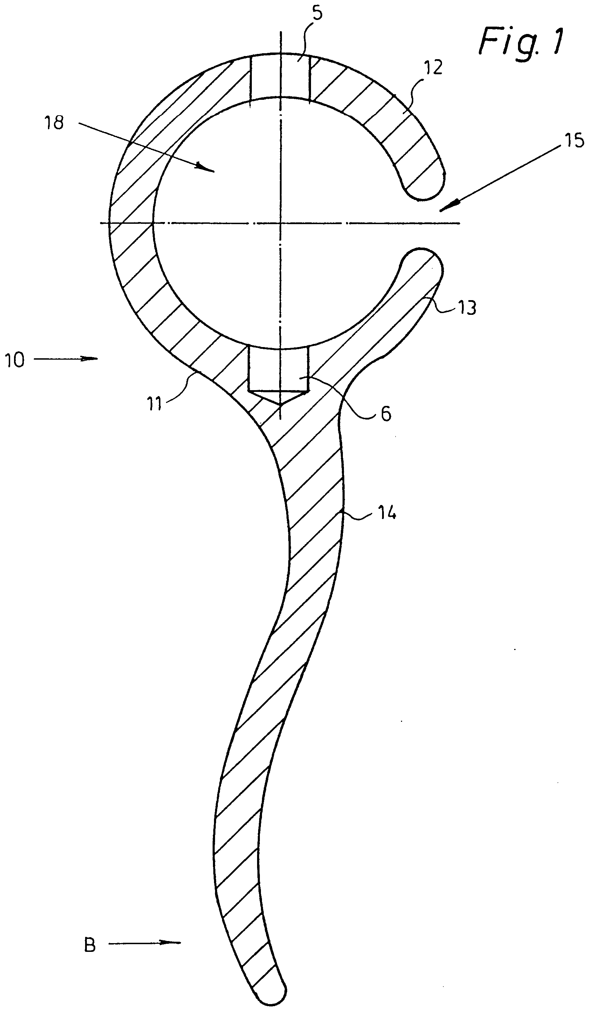

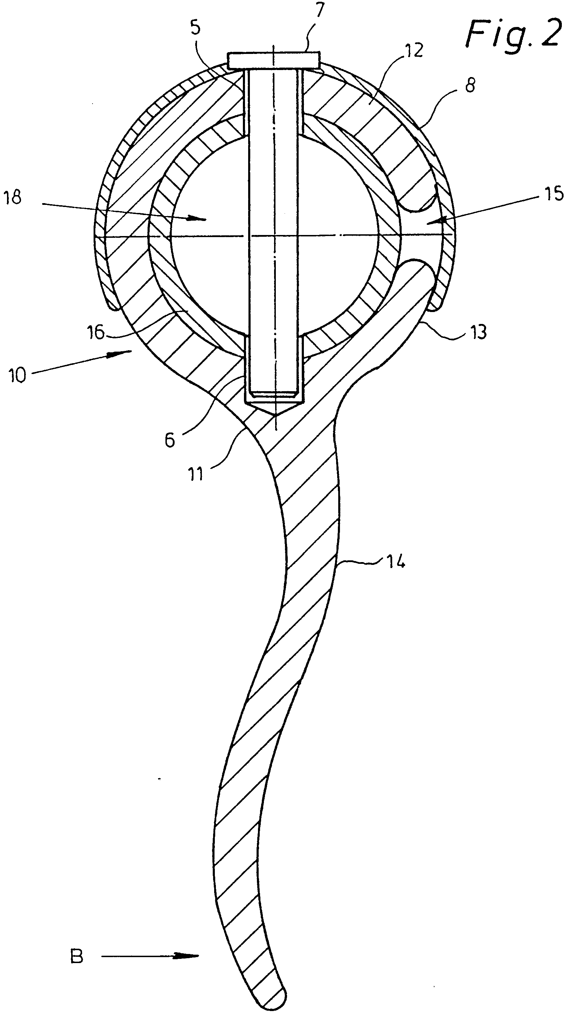

Die grundsätzliche Gestaltung des erfindungsgemäßen Zinkens verdeutlicht die Schnittdarstellung gemäß Fig. 1 . Der Aufbau zeigt den Zinken 10, der an einem Ende die Öse 18 aufweist. Die Öse 18 wird gebildet durch die Ösenabschnitte 12 und 13. Zur Einbauerleichterung ist die Öse 18 mit einem Ösenschlitz 15 versehen, der eine Spreizung der Öse 18 erlaubt. Der Ösenschlitz 15 ist dabei übereinstimmend mit der Beanspruchungsrichtung B angeordnet, wodurch sich ein vom Ösenfuß (11) beginnender, etwa über 225° erstreckender langer Ösenabschnitt 12 und ein sich daran angepaßter kurzer Ösenabschnitt 13 einstellt. Die Anordnung des Ösenschlitzes 15 hat zur Folge, daß bei einer Krafteinleitung in Richtung B sich eine Ösen-Beanspruchung einstellt, die ein "Zuziehen" der Öse 18 bewirkt. Damit ergibt sich vorteilhaft eine für die Dauerfestigkeit des Zinkens 10 günstige Krafteinleitung, die sich vom Schaft 14 über den Ösenfuß 11 in den Ösenabschnitt 12 fortpflanzt. Durch eine an die Verwendung des Zinkens 10 angepaßte Werkstoffwahl und Dimensionierung ist ein Momentenverlauf erreichbar, der eine hohe Lebensdauer gewährleistet. Die Fig. 1 verdeutlicht weiter die äußere glattflächige Gestaltung des Zinkens, an der das geförderte Halmgut vorteilhaft abgleitet und damit eine hohe Einsatzbereitschaft der Erntemaschine gewährleistet ist, die mit den erfindungsgemäßen Zinken versehen ist. Der Schaft 14 weist eine doppelte Krümmung auf und ist als Rundkörper ausgebildet, der vom Ösenfuß 11 beginnend zu seinem freien Ende sich kontinuierlich verjüngt und an seinem freien Ende in die Belastungsrichtung B zeigt. Die Befestigung und Drehsicherung des Kunststoffzinkens 10 erfolgt durch einen Befestigungsbolzen 7, wie in Fig. 2 dargestellt, der eingesetzt in die Bohrung 5 im Ösenabschnitt 12 bis zur Sacklochbohrung 6 im Ösenfuß 11 reicht und dabei durch eine dem Durchmesser des Befestigungsbolzens 7 angepaßte Bohrung im Tragkörper 16 lagepositioniert ist. Der Befestigungsbolzen 7 ist endseitig mit zwei sich gegenüberliegend angeordneten Klammern 8 versehen, die in der Einbaulage des Befestigungsbolzens auf dem Außenumfang der Öse 18 anliegen und diese jeweils über einen Winkel von größer als 90° umschließen. Diese Gestaltung ermöglicht einen werkzeuglosen Wechsel des erfindungsgemäßen Zinkens, wodurch eine günstige, schnelle und damit Kostengünstige Montage und Demontage sichergestellt ist. Insbesondere für den Anwendungsfall des Zinkens an der Mähdrescherhaspel, deren Zinken senkrecht nach unten gerichtet sind, ist diese Zinkenbefestigung vorteilhaft, da sie eine gute Zugänglichkeit des Befestigungsbolzens 7 erlaubt.

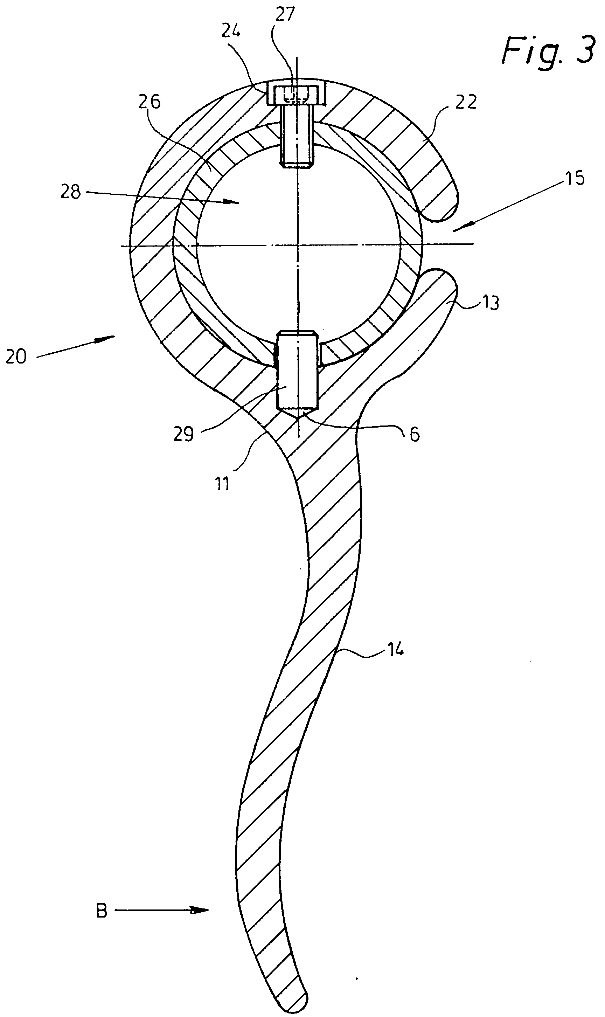

Der Fig. 3 ist eine alternative Befestigung des Zinkens 20 zu entnehmen, der im Aufbau weitestgehend dem Zinken 10 (Fig. 1) entspricht. Übereinstimmende Bereiche des Zinkens sind daher mit den Bezugsziffern des Zinkens 10 versehen.

Der Zinken 20 ist über die Schraube 27, die in eine Stufenbohrung 24 im Ösenabschnitt 22 eingebracht ist, mit dem Tragkörper 26 verschraubt. Der Schraube 27 gegenüberliegend im Ösenfuß 11 ist ein Mitnehmer 29 in der Sacklochbohrung 6 eingesetzt, der in eine entsprechende Bohrung des Tragkörpers 26 eingreift. Aus Festigkeitsgründen bietet es sich an, den Mitnehmer 29 beispielsweise in einer Stahlausführung auszubilden.

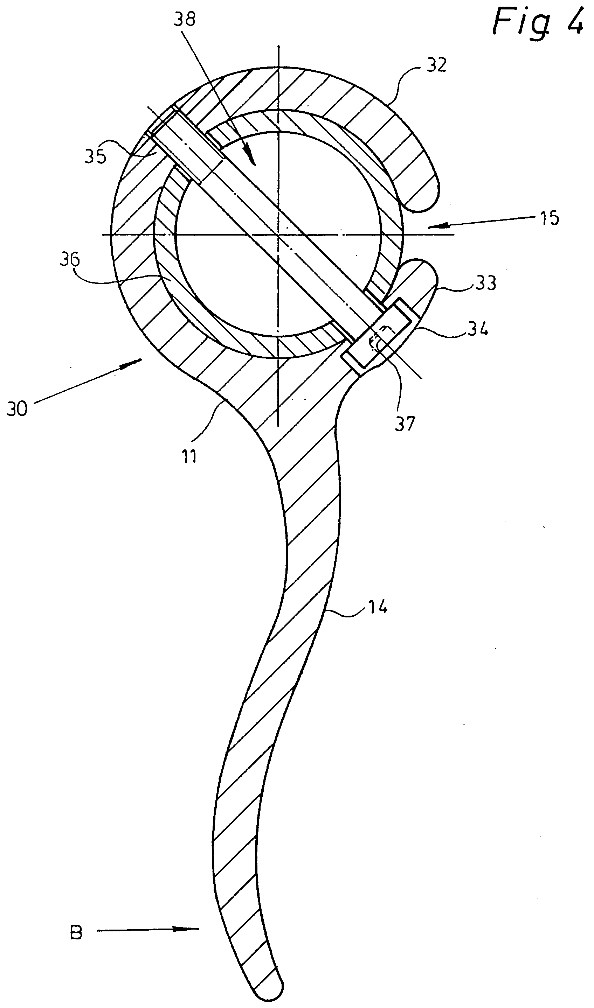

Eine weitere Befestigung eines Zinkens, die aufgrund spezieller Einbauverhältnisses des Zinkens erforderlich sein kann, zeigt die Fig. 4. Der ebenfalls über weite Bereiche mit dem in Fig. 1 dargestellten Zinken 10 vergleichbare Zinken 30 ist durch eine Verschraubung auf dem Tragkörper 36 gehalten, die eine Schraube 37 aufweist, welche in eine im Ösenabschnitt 33 eingebrachte Stufenbohrung 34 eingesetzt ist und mit dem Ösenabschnitt 32 durch das Gewinde 35 verschraubt ist. Die Schraube 37 ist dabei durch den Tragkörper 36 geführt und bewirkt eine Verschraubung der Öse 38 am Tragkörper 36.

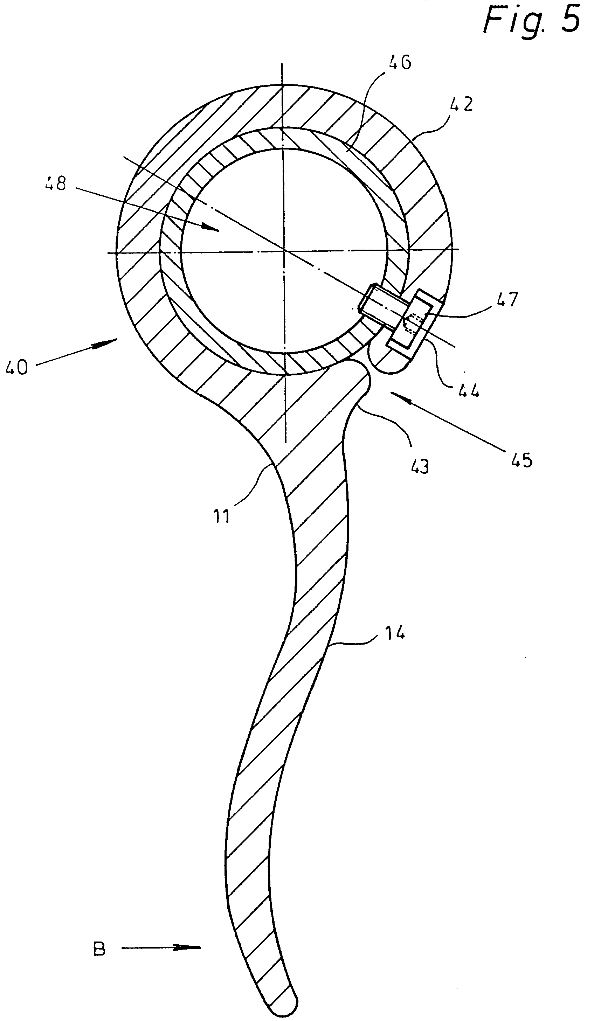

Ein nahezu geschlossenes "Anliegen" der Öse 48, insbesondere des Ösenabschnittes 42 aus Tragkörper 46 zeigt die Gestaltung des Zinkens 40 in Fig. 5, bei der der Ösenabschnitt 42 den Tragkörper 46 über einen Winkel von ca. 270° umschließt und der weitere Ösenabschnitt 43 bis zum Ösenschlitz 45 reichend kurz ausgeführt ist. Diese Ausbildung stellt damit eine erhebliche Verlängerung des Federweges von der Krafteinleitung bis zur Befestigung des Zinkens 40 dar. Als Befestigung und Drehsicherung ist die Schraube 47 vorgesehen, die im Endbereich des Ösenabschnitts 42 in einer Stufenbohrung 44 eingesetzt und über ein Gewinde mit dem Tragkörper 46 verschraubt ist.

## Patentansprüche

1.  Zinken für landwirtschaftliche Erntemaschinen eingesetzt in rotierende Bauteile zur Förderung von Halmgut, deren einteiliger Aufbau an einem Ende eine geschlitzte Öse aufweist, deren Schlitzanordnung unterschiedlich lange Ösenabschnitte ergibt und von der Öse ausgehend sich ein verjüngender, teilweise gekrümmter Schaft anschließt, und der Zinken mit der Öse an einem Tragkörper befestigt und lagefixiert ist,
    dadurch gekennzeichnet, daß der Ösenschlitz (15, 45) auch im eingebauten Zustand unverschlossen ist und daß zur Lagefixierung zumindest ein getrenntes Bauelement vorgesehen ist, das radial in den Tragkörper (16, 26, 36, 46) reicht und in der Öse (18, 28, 38, 48) und/oder im Ösenfuß angeordnet ist.

2.  Zinken nach Anpruch 1,
    dadurch gekennzeichnet, daß zur Lagefixierung ein Befestigungsbolzen dient, der in der Öse (18) eingesetzt ist und bis in den Tragkörper (16) ragt.

3.  Zinken nach den Ansprüchen 1 und 2,
    dadurch gekennzeichnet, daß der Befestigungsbolzen (7) durch die Öse (18) und den Tragkörper (16) bis in eine Sacklochbohrung (6) im Ösenfuß (11) geführt ist, wobei der Befestigungsbolzen (7) in der Einbaulage mit der Richtung des Schafts (14) übereinstimmt.

4.  Zinken nach einem der vorhergehenden Ansprüche,
    dadurch gekennzeichnet, daß zur Befestigung des Zinkens (20) eine Schraube in der Öse (28) eingesetzt ist, für die ein Einschraubgewinde im Ösenfuß (11) angeordnet ist und deren Einbaulage mit der des Schafts (14) übereinstimmt.

5.  Zinken nach einem der vorhergehenden Ansprüche,
    dadurch gekennzeichnet, daß eine Schraube (27) die Öse (28) mit dem Tragkörper (26) verschraubt und der Zinken (20) zusätzlich einen Mitnehmer (29) aufweist, der im Ösenfuß (11) in der Sacklochbohrung (6) eingesetzt ist.

6.  Zinken nach einem der vorhergehenden Ansprüche,
    dadurch gekennzeichnet, daß eine Schraube (37) zur Lagefixierung eingesetzt ist, deren Einbaulage einen Winkel von ca. 45° zum Schaft (14) aufweist und im kurzen Ösenabschnitt (33) zwischen dem Ösenschlitz (15) und dem Ösenfuß (11) eingesetzt ist, das Tragrohr (36) durchdringt, bis zum Ösenabschnitt (32) reicht und dort eingeschraubt ist.

7.  Zinken nach einem der vorhergehenden Ansprüche,
    dadurch gekennzeichnet, daß der Ösenschlitz (45) unter einem Winkel von ca. 45° zum Schaft (14) auf der bei Krafteinleitung auf den Zinken (40) unbelasteten Seite der Öse (48) angeordnet ist und im Endbereich des langen Ösenabschnittes (42) eine Schraube (47) eingesetzt ist, die den Tragkörper (46) mit dem Ösenabschnitt (42) verschraubt.

**8.** Zinken nach einem der vorhergehenden Ansprüche,
dadurch gekennzeichnet, daß der Zinken (20, 30, 40) aus Kunststoff hergestellt ist.

**9.** Zinken nach Anspruch 5,
dadurch gekennzeichnet, daß der Mitnehmer (29) aus Stahl gefertigt ist.

**10.** Zinken nach einem der vorhergehenden Ansprüche,
dadurch gekennzeichnet, daß die Enden der gegenüberliegenden unterschiedlich langen Ösenabschnitte (12, 13; 13, 22; 22, 33), die jeweils einen Ösenschlitz (15) bilden gerundet ausgeführt sind, wobei der Querschnitt der einzelnen Ösenabschnitte unverändert bleibt und der Ösenschlitz (15) unter einem Winkel von nahezu 90° zum Schaft (14) auf der Ösenseite, die mit der Richtung der Krafteinleitung in den Zinken (20, 30) übereinstimmt, angeordnet ist.

**11.** Zinken nach den Ansprüchen 2 und 3,
dadurch gekennzeichnet, daß der Befestigungsbolzen (7) an seinem Kopfende zumindest eine elastische Klammer (8) aufweist, deren Längserstreckung in der Einbaulage auf dem Außenumfang der Öse (18) jeweils einen Winkel von mehr als 90° vom Befestigungsbolzen (7) ausgehend überdeckt.

**12.** Zinken nach einem der vorhergehenden Ansprüche,
dadurch gekennzeichnet, daß der Schaft (14) eine doppelte Krümmung besitzt, wobei das freie Ende zur Beanspruchungsrichtung zeigt.

**13.** Zinken nach einem der vorhergehenden Ansprüche,
dadurch gekennzeichnet, daß der Schaft (14) als Rundprofil ausgebildet ist, der ausgehend von der Öse (18, 28, 38, 48) zum freien Ende sich kontinuierlich verjüngt.

*Fig. 1*

*Fig. 2*

Fig. 3

Fig 4

*Fig. 5*